# EUROPEAN PATENT SPECIFICATION

(11) **EP 0 582 656 B1**
(45) Date of publication and mention of the grant of the patent: **07.04.1999**
(21) Application number: 92911438.7
(22) Date of filing: 28.04.1992
(51) Int. Cl.: C09K 19/54, G02F 1/1333

(54) **CRYSTALLINE LIGHT MODULATING DEVICE AND MATERIAL**
FLÜSSIGKRISTALL LICHTMODULIERUNGS-VORRICHTUNG UND -MATERIAL
DISPOSITIF ET MATERIAU MODULATEURS DE LUMIERE A CRISTAUX LIQUIDES

(30) Priority: 02.05.1991 US 694840
(43) Date of publication of application: 16.02.1994
(73) Proprietor: KENT STATE UNIVERSITY, Kent, OH 44242 (US)
(72) Inventor: DOANE, William, J., Kent, OH 44240 (US); YANG, Deng-Ke, Kent, OH 44240 (US); CHIEN, Liang-Chy, Stow, OH 44224 (US)
(74) Representative: Wise, Stephen James
(86) International application number: PCT/US92/03504
(87) International publication number: WO 92/19695

(56) References cited:
- EP-A- 0 313 053
- EP-A- 0 451 905
- US-A- 3 600 060
- US-A- 4 890 902
- US-A- 4 994 204
- DATABASE WPI Derwent Publications Ltd., London, GB; AN 92074595 & JP-A-4 014 015 (DAINIPPON INK) 20 January 1992
- DATABASE WPI Derwent Publications Ltd., London, GB; AN 91-127536 & JP-A-3 064 731 (DAINIPPON INK) 20 March 1991

## Description

### BACKGROUND OF THE INVENTION

### TECHNICAL FIELD

The present invention relates generally to liquid crystalline light modulating devices, and more specifically to new phase-separated polymeric-liquid crystalline display cells and materials which exhibit different optical states under different electrical field conditions and are characterized by a unique combination of properties, including optical bistability and haze-free light transmission at all viewing angles in either a field-ON or field-OFF mode.

### DESCRIPTION OF THE RELATED ART

Electrically switchable liquid crystal-polymer films intended for use in various electro-optical devices have been prepared by mechanical entrapment procedures. One such technique involves imbibing liquid crystal into micropores of a plastic or glass sheet. Another technique involves evaporation of water from an aqueous emulsion of nematic liquid crystal in a solution of water-soluble polymer such as polyvinyl alcohol or in a latex emulsion.

A different procedure offering significant advantages over mechanical entrapment techniques and the emulsification procedure involves phase separation of nematic liquid crystal from a homogeneous solution with a suitable synthetic resin to form a liquid crystal phase dispersed with a polymer phase. The resulting materials are referred to as polymer dispersed liquid crystal (PDLC) films. Some of the advantages of PDLC films are discussed in U.S. Patent Nos. 4,671,618; 4,673,255; 4,685,771; and 4,788,900; the disclosures of which are incorporated by reference. PDLC films have been shown to be useful in many applications ranging from large area displays and switchable coatings for windows to projection displays and high-definition television.

The methods of phase separation can be carried out by polymerization initiated by addition of a curing agent, by ultraviolet light or by cooling into the region of immiscibility. Another method is evaporating a solvent from a matrix-producing composition of a solution of polymer and liquid crystal in the solvent.

The various methods of preparing PDLC films are accompanied by techniques of matching and mismatching the effective index of refraction of the liquid crystal phase with the index of refraction of the polymer to achieve the desired viewing angle in which displays, windows, etc. incorporating the films may be made viewable or clear. In the case of PDLC films made with liquid crystal having positive dielectric anisotropy, the ordinary index of refraction of a liquid crystal typically is matched to the refractive index of the polymer so that in a field-ON state, the display or window appears visible or clear because the optical axes of refraction of the liquid crystal are aligned parallel to the field and normal to the viewing surface. In the field-OFF state, the optical axes of the liquid crystal and polymer are misaligned and randomly oriented so that incident light is scattered and the display or window appears opaque.

In windows or displays as described above in which the ordinary index of refraction of the liquid crystal is matched to the refractive index of the polymer, the device appears most transparent (field-ON state) when viewed along the direction of the field which is usually normal to the viewing surface. Transparency decreases giving rise to increasing "haze" at increasing oblique viewing angles until an essentially opaque appearance is detected at an oblique enough angle. This condition of haze results from the fact that the farther the viewing angle is from the orthogonal, the greater is the perceived mismatch between the effective index of refraction of the liquid crystal and the refractive index of the matrix.

A further development of PDLC films disclosed in U.S. Patent Application Ser. No. 07/324,051, now U.S. Patent No. 4,994,204 issued February 19, 1991, involves the use of a birefringent polymer, e.g., a liquid crystal polymer. The PDLC film prepared with the birefringent polymer has the characteristic of displaying haze-free transparency for all directions of incident light. This is accomplished by matching the ordinary and extraordinary indices of refraction of the polymer to the ordinary and extraordinary indices of refraction of the liquid crystal.

PDLC films made with birefringent polymer can operate in the normal manner so that they are clear in a field-ON state and light scattering in a field-OFF state. Alternatively, the films can be made to operate in a reverse or "fail-safe" mode such that the material is clear in the absence of a field and is light scattering in the field-ON state.

### DISCLOSURE OF THE INVENTION

The invention is a new electrically switchable, PDLC material which exhibits a unique combination of properties that afford major advantages over preceding technology. For example, the new material can operate either in the mode of being light scattering in a field-OFF condition and clear in a field-ON condition or in the reverse mode of being clear in the field-OFF condition and light scattering in the field-ON condition. In both instances, the material is haze-free at all viewing angles when in the clear state.

Another important feature of the invention is that the new PDLC material can be prepared so that it exhibits two optically different states, both of which are stable in the absence of an applied field. When incorporated in a display device, the material can be driven from one state to another by an electric field. A low electric field pulse results in a light scattering state which is white in appearance. The application of a high electric field pulse, i.e., an electric field high enough to homeotropically align the liquid crystal directors, drives the material to a light reflecting state that can be any desired color. The light scattering and light reflecting states remain stable at zero field. If a high electric field is maintained, the material is transparent until the field is removed. When the field is turned off quickly, the material reforms to the light reflecting state and, when the field is turned off slowly, the material reforms to the light scattering state. Application of mechanical stress to the material can also be used to drive the material from the light scattering to the light reflecting state.

A major advantage of the bistable material is that it does not require an active matrix to make a high-definition flat panel screen. The screen can be prepared without active elements at each pixel site and a multiplexing scheme used to address the display. This greatly simplifies production, increases yield and reduces the cost of the display.

Multiplexed flat panel liquid crystal displays are not new and have been developed primarily with super twisted nematic materials for applications such as lap-top computer screens where speed, contrast or color is not an important issue. Ferroelectric liquid crystals, which exhibit a surface stabilized bistable state, also can be multiplexed. These displays have not proven to be commercially viable because the surface is not stable over long periods of time or under severe operating conditions. The new material of the present provides several advantages in that the light scattering and light reflecting states are materially stabilized without requiring delicate surface conditions. Display devices made with the material of the invention do not require polarizers which limit the brightness of the displays. Furthermore, color is introduced by the material itself without the need of color filters which also can reduce brightness.

The PDLC liquid crystalline light modulating material of the invention is incorporated in a cell having wall structure treated to align the liquid crystal molecules and any suitable addressing means for establishing a field through the material. The addressing means can be of any type known in the art, such as an active matrix, a multiplexing circuit, electrodes, etc. The new liquid crystalline light modulating material comprises phase-separated polydomains of polymer network dispersed in a chiral nematic liquid crystal having positive dielectric anisotropy. The polymer is present in an amount less than 10% by weight based on the combined weight of chiral liquid crystal and polymer. The liquid crystal molecules in the vicinity of the polydomains are preferentially oriented and are anchored by the polymer network so as to be less responsive to an applied field than the surrounding liquid crystal molecules whose orientation is strongly influenced by field conditions and the surface aligning effect of the cell walls. As a result, the new material can be made to exhibit different optical states, i.e., light scattering, light reflecting and light transmitting, under different field conditions.

The monomeric material used to form the polymer networks is soluble with the chiral nematic liquid crystal and phase separates upon polymerization to form ordered polymer networks. Examples of useful monomers have at least two polymerizable double bonds so as to be cross-linkable, and include bisacrylates and the like. The chiral nematic liquid crystal is a mixture of nematic liquid crystal having positive dielectric anisotropy and chiral material in an amount sufficient to produce a desired pitch length.

In cells which operate in either the normal mode of being light scattering in a field-OFF condition and light transmitting in a field-ON condition or the reverse mode of being light transmitting in the field-OFF condition and light scattering in a field-ON condition, the chiral nematic liquid crystal has a pitch length effective to reflect light in the infra-red spectrum. A preferred pitch length for normal mode cells ranges from about 1.3 to about 1.6 microns, and a preferred pitch length for reverse mode cells ranges from about 1.3 to about 3.7 microns. Liquid crystalline light modulating materials that operate in the normal mode have been prepared with chiral nematic liquid crystal containing from about 9 to about 11% by weight, chiral material based on the combined weight of nematic liquid crystal and chiral material, and from about 2.5 to about 5% by weight polymer based on the combined weight of the chiral liquid crystal and polymer. Examples of liquid crystalline material capable of operating in a reverse mode comprise chiral nematic liquid crystal containing from about 4 to about 12% by weight chiral material based on the combined weight of nematic liquid crystal and chiral material, and from about 2.4 to about 5% by weight polymer based on the combined weight of the chiral liquid crystal mixture and polymer. It will be understood that, in both instances, the weight amounts can vary depending upon the particular liquid crystal, chiral material and polymer which are used.

The solution of chiral nematic liquid crystal and polymer preferably contains a small amount of photo-initiator. In carrying out the invention, the solution is introduced into a cell, having its walls treated in any suitable manner to provide for surface alignment of the liquid crystal molecules parallel to the cell walls. The cell walls may, for example, be provided with rubbed polyimide layers or treated with detergent or chemicals, etc., all as is known in the art. Polymerization is initiated in any suitable manner, as by UV radiation. Under polymerization conditions, the polymer phase separates from the chiral nematic liquid crystal and forms polydomains consisting of cross-linked polymer molecules. The liquid crystal molecules in proximity to the polydomains are preferentially oriented and are anchored by the polymer network.

In the case of normal mode cells, polymerization takes place in the presence of an electric field that aligns the crystal liquid molecules orthogonally to the cell walls. When polymerization has been completed and the electric field removed, the liquid crystal molecules in the vicinity of the polymer networks are anchored in a preferential homeotropic alignment. The surrounding chiral liquid crystal has a focal conic texture which results from competition between the surface aligning effect of the cell walls and the constraining effect of the polymer network. In the field-OFF condition, the polymer-liquid crystalline material is strongly light scattering and the cell is opaque. In the field-ON condition, the focal conic texture reforms to homeotropic alignment so that the cell is optically clear. There is negligible variation or fluctuation of refractive index throughout the liquid crystalline material because of the homeotropic alignment of the liquid crystal molecules and the very small amount of polymer in the composition. Therefore, the cell is haze-free at all viewing angles.

In the case of reverse mode cells, polymerization takes place in the absence of a field. Because of the surface aligning effect of the cell walls, the liquid crystal molecules throughout the cell have a twisted planar structure. In the absence of a field, the cell is optically clear, since there is no reflecting or scattering in the visible light region. In a field-ON condition, the liquid crystal molecules in proximity to the polydomains prefer the twisted planar structure due to the anchoring effect of the polymer network. The surrounding liquid crystal molecules have a focal conic texture in the presence of the field as a result of competition of the surface alignment effect, the electric field and the constraint of the liquid crystal-polymer composition. In this condition, the cell is strongly light scattering.

As generally described above, an important embodiment of the invention is a liquid crystalline light modulating material that exhibits a stable, light reflecting colored state, a stable light scattering state, and an optically clear state. In this embodiment, the chiral nematic liquid crystal has a pitch length in a preferred range of from about 0.25 to 0.44 microns effective to reflect circularly polarized colored light. Typical pitch lengths are 0.27 microns for blue color, 0.31 microns for green color and 0.40 microns for red color. Bistable color display materials have been prepared containing from about 27 to 48% chiral material based on the combined weight of nematic liquid crystal and chiral material, and from about 1.0 to about 4.5% polymer based on the combined weight of the chiral nematic liquid crystal mixture and polymer. The ranges can vary, however, depending upon the chiral material, liquid crystal and the polymer which are used.

The bistable color display of cells are prepared by phase separating and polymerizing the liquid crystal-polymer solution with UV radiation, either in zero field or in a field effective to align the liquid crystal directors. In both instances, the polymer networks that are created in the material serve to stabilize the light scattering state resulting from application of a low electric field pulse and the light reflecting state resulting from application of a high electric field pulse.

In the field-OFF condition with the liquid crystal molecules in a twisted planar structure parallel to the cell walls, the cell is in a colored light reflecting state. This state can be made to appear as green, red, blue, or any pre-selected color depending upon the pitch length of the chiral nematic liquid crystal. When a low electric field, e.g. 6 volts per micron of thickness, is applied to the cell, it will switch to a white, light scattering state. In this state, the liquid crystal molecules surrounding the polydomains have a focal conic texture as a result of the competition of the surface aligning effect, the electric field and the constraint of the polymer networks. The material will remain in the light scattering state when the low electric field is removed. If a higher electric field, e.g. 12 volts per micron of thickness, is applied to the cell, the material becomes optically clear until the voltage is removed. If the electric field is turned off quickly, the material switches to the uniform twisted planar structure which has the pre-selected color dictated by the pitch length. The light reflecting state remains stable at zero field condition. If the field is turned off slowly, the material changes to its light scattering state which also remains stable at zero field condition.

Many additional features, advantages and a fuller understanding of the invention will be had from the following detailed description of preferred embodiments and the accompanying drawings.

### BRIEF DESCRIPTION OF THE DRAWINGS

Figure 1 is a diagrammatic, cross-sectional view of a light modulating cell incorporating the polymer-liquid crystalline material of the invention.

Figure 2 is a diagrammatic, fragmentary, enlarged cross-sectional view of the new material when the liquid crystal is homeotropically aligned to affect an optically clear state.

Figure 3 is a diagrammatic, fragmentary, enlarged cross-sectional view of the material in a light scattering state wherein the liquid crystal in proximity to the polydomains is homeotropically aligned, while the surrounding liquid crystal has a focal conic structure.

Figure 4 is a diagrammatic, fragmentary, enlarged cross-sectional view of the material when the liquid crystal has a twisted planar structure.

Figure 5 is a diagrammatic, fragmentary, enlarged cross-sectional view of the material wherein the liquid crystal in proximity to the polydomains has a twisted planar structure, while the surrounding liquid crystal has a focal conic texture.

### DESCRIPTION OF PREFERRED EMBODIMENTS

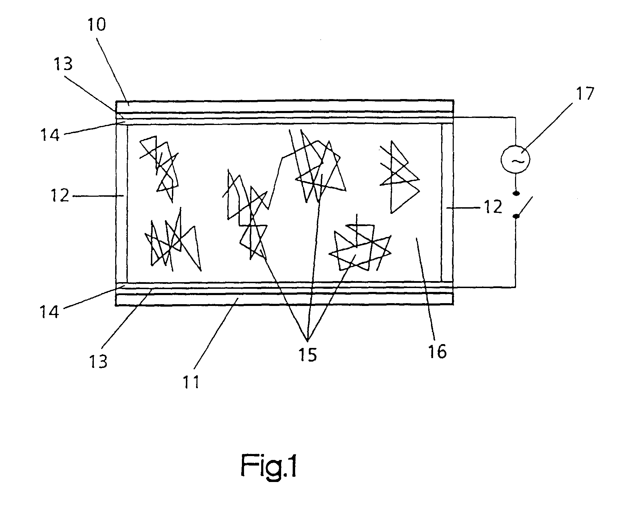

The diagrammatically illustrated cell in Figure 1 comprises glass plates 10, 11 which are sealed around their edges and separated by spacers 12. As shown, the glass plates 10, 11 are coated indium-tin oxide or the like to form transparent electrodes 13. The electrodes 13 are provided with rubbed polyimide coatings 14 in order to affect homogeneous surface alignment of the liquid crystal directors.

The cell of Figure 1 is filled with the polymer-liquid crystalline material of the invention. The liquid crystalline light modulating material is generally comprised of phase-separated polydomains 15 of polymer network dispersed in surrounding chiral nematic liquid crystal 16 having positive dielectric anisotropy. An AC voltage source 17 is shown connected to the electrodes 13 in order to switch the cell between different optical states.

It is to be understood that the form of the cell depicted in Figure 1 has been chosen only for the purpose of describing a particular embodiment and function of the new liquid crystalline light modulating material of the invention, and that the new material can be addressed in various ways and incorporated in other types of cells. For example, instead of being addressed by externally activated electrodes, the new material can be addressed by an active matrix, a multiplexing scheme or other type of circuitry, all of which will be evident to those working in the art.

In accordance with the invention, the polydomains 15 are defined by cross-linked polymer networks which are phase separated from a solution with the chiral nematic liquid crystal. As will be explained in more detail, the chiral nematic liquid crystal in proximity to the polydomains 15 is preferentially oriented and the liquid crystal molecules are anchored by the cross-linked polymer so as to be less responsive to an applied field than the surrounding liquid crystal. The liquid crystal surrounding the polydomains is responsive to field conditions, whereby the cell will exhibit different optical states under different field conditions.

The polymer content is less than 10% by weight based on the combined weight of chiral nematic liquid crystal and polymer. In preferred compositions, the polymer content ranges from about 1.5 to about 5%. Normal mode and reverse mode operating materials usually contain polymer in an amount ranging from about 2.4 to 5.0%, while bistable materials usually contain from about 1.0 to about 4.5% polymer. It is to be understood that the polymer content is subject to some variation, inasmuch as what constitutes a desirable or undesirable appearance of the cell in its various optical states is a matter of subjective judgment.

In a preferred matter of preparing the cell shown in Figure 1, the polymer, which preferably can be polymerized by UV radiation, is dissolved with the chiral nematic liquid crystal together with a small amount of photo-initiator. The solution is then introduced between the glass plates 10, 11 having the rubbed polyimide coatings 14. The solution is irradiated in situ with UV light to affect polymerization and concomitant phase separation of the polymer to form the polydomains 15. The radiation of the monomer-liquid crystal solution can take place either in the presence of an electric field effective to homeotropically align the liquid crystal directors or in zero field. In the latter case, the surface aligning effect of the polyimide layers 14 causes the liquid crystal molecules to be oriented in a twisted planar structure parallel to the cell walls.

### Normal Mode Cells

Normal mode cells which scatter light in a field-OFF condition and are optically clear in a field-ON condition are prepared using a chiral nematic liquid crystal effective to reflect light in the infra-red spectrum. A preferred pitch length ranges from about 1.3 to about 1.6 microns. Liquid crystalline light modulating materials having the desired pitch length may contain from about 9 to about 11% by weight chiral material based on the combined weight of nematic liquid crystal and chiral material; although, the weight amounts can vary depending upon the particular liquid crystal, chiral material and polymer which are used.

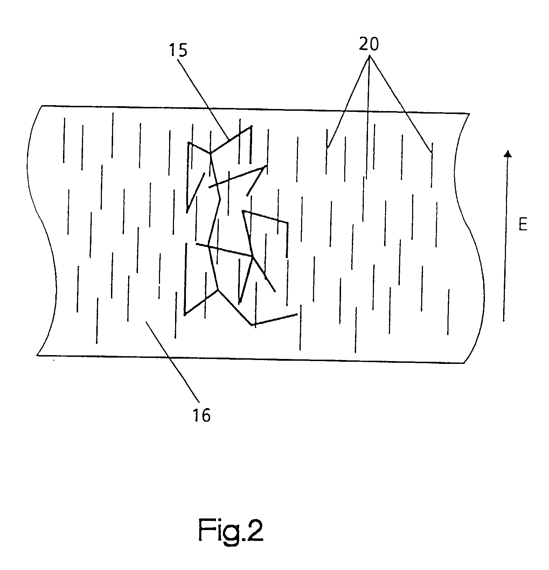

Normal mode cells are prepared by irradiating the monomer-liquid crystal solution in the presence of an electric field. As shown in Figure 2, the electric field is effective to untwist the chiral nematic liquid crystal molecules and homeotropically align the liquid crystal directors 20. A single polydomain 15 is conceptually illustrated in Figure 2.

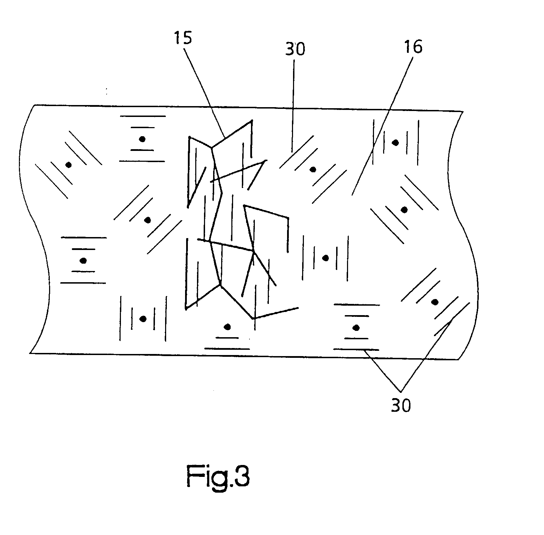

Each of the polydomains 15 is believed to be a complex, cross-linked, three-dimensional network. When the electric field is turned off as illustrated in Figure 3, the liquid crystal in the vicinity of each polydomain 15 tends to remain homeotropically aligned because of the anchoring affect of the polymer network. The surrounding liquid crystal indicated by reference numeral 30 tends to reform to a focal conic texture, i.e., helically twisted molecules having randomly oriented helical axes. The focal conic texture results from competition between the surface aligning effect of the rubbed polyimide layers 14 and the constraining effect of the polymer networks throughout the liquid crystal. In the field-OFF condition illustrated in Figure 3, the polymer-liquid crystalline material is strongly light scattering independent of the polarization of incident light.

When the electric field is turned on to homeotropically align the liquid crystal directors as shown in Figure 2, the polymer-liquid crystalline material is optically clear. Because of the very small amount of polymer in the composition, there is no significant variation or fluctuation of a refractive index throughout the liquid crystalline material. Therefore, the cell incorporating the material is haze-free at all viewing angles.

### Example 1

A normal mode cell, light scattering in the field-OFF condition and optically clear in a field-ON condition, was prepared using a solution of chiral nematic liquid crystal containing 8.8% by weight chiral material based on the combined weight of nematic liquid crystal and chiral material, and 2.9% by weight of a cross-linking monomer based on the combined weight of chiral nematic liquid crystal and monomer. The chiral nematic liquid crystal had a pitch length of about 1.4 microns.

The polymerizable solution consisted of:
175.2 mg. of E-31LV nematic liquid crystal mixture;
8.3 mg. of 4"-(2-methylbutylphenyl) - 4'-(2-methylbutyl)-4-biphenyl carboxylate (chiral material);
8.5 mg. of 4-cyano-4'-(2-methyl) butylbiphenyl (chiral material);
5.7 mg. of bisacryloyl biphenyl (monomer), and
1.0 mg. of benzoin methyl ether (photo-initiator).

E-31LV consists essentially of a mixture of: 4 ethyl 4'-cyanobiphenyl, 4-butyl-4'-cyanobiphenyl, 4-hexyl-4'-cyanobiphenyl, 4-methoxy-4'-cyanobiphenyl, 4-propyloxy-4'-cyanobiphenyl, 4-pentyl-4'-cyanoterphenyl and 4-(4'-ethylbiphenyl-4-carbonyloxy) methyl benzene.

A cell having two glass plates sealed at the edges and separated by 8 micron thick Mylar spacers was filled with the polymerizable solution. The glass plates were coated with indium-tin oxide to provide transparent electrodes. The electrodes were coated with polyimide and buffed to affect homogeneous surface alignment of the liquid crystal.

The filled cell was irradiated with U.V. light to polymerize the monomer and cause phase separation of the polymer into polydomains of polymer network throughout the chiral liquid crystal. While the cell was being irradiated, an AC electric voltage was applied to cause homeotropic alignment of the liquid crystal.

At zero field, the cell was opaque or light scattering and the transmittance in this state was less than 5%. When an AC voltage (Vᵣₘₛ=35V) was applied across the cell, it became optically clear. In the field-ON condition, the cell was transparent for incident light at all viewing angles.

### Example 2

The following tests were performed to examine the effect of varying the pitch length and concentration of chiral material on the light scattering ability of the cell in the field-OFF state.

A normal mode cell was prepared using a solution of chiral nematic liquid crystal containing 11.1% by weight chiral material based on the combined weight of nematic liquid crystal and chiral material, and 2.9% by weight of a cross-linking monomer based on the combined weight of chiral nematic liquid crystal and monomer. The chiral nematic liquid crystal had a pitch length of about 1.4 microns.

The polymerizable solution consisted of:
144 mg. of E-31LV nematic liquid crystal mixture from EM Industries;
18 mg. of 4-cyano-4'-(2-methyl) butylbiphenyl (chiral material);
4.9 mg. of 4,4'-bisacryloyl biphenyl (monomer); and
1.0 mg. of benzoin methyl ether (photo-initiator).

The cell was prepared as in Example 1. An AC electric voltage was applied during polymerization to cause homeotropic alignment of the liquid crystal.

At zero field, the cell was opaque or light scattering and the transmittance was less than 5%. When an AC voltage (Vᵣₘₛ=25V) was applied across the cell, it became optically clear. In the field-ON condition, the cell was transparent for incident light at all viewing angles.

A normal mode cell was prepared using a solution of chiral nematic liquid crystal containing 12.9% by weight chiral material based on the combined weight of nematic liquid crystal and chiral material and 3.3% by weight of a cross-linking monomer based on the combined weight of chiral nematic liquid crystal and monomer. The chiral nematic liquid crystal had a pitch length of about 1.2 microns.

The polymerizable solution consisted of:
137 mg. of E-31LV nematic liquid crystal mixture;
20.4 mg. of 4-cyano-4'-(2-methyl) butylbiphenyl (chiral material);
5.3 mg. of 4,4'-bisacryloyl biphenyl (monomer); and
2.4 mg. of benzoin methyl ether (photo-initiator).

The cell was prepared as in Example 1. An AC electric voltage was applied during polymerization to cause homeotropic alignment of the liquid crystal.

At zero field, the cell was opaque or light scattering and the transmittance of the cell was 15%. When an AC voltage (Vᵣₘₛ=21V) was applied across the cell, it became optically clear. In the field-ON condition, the cell was transparent for incident light at all viewing angles. Because the zero field transmittance was 15%, the cell was marginally effective.

A normal mode cell was prepared using a solution of chiral nematic liquid crystal containing 5.9% by weight chiral material based on the combined weight of nematic liquid crystal and chiral material and 2.2% by weight of a cross-linking monomer based on the combined weight of chiral nematic liquid crystal and monomer. The chiral nematic liquid crystal had a pitch length of 2.6 microns.

The polymerizable solution consisted of:
200 mg. of E-31LV nematic liquid crystal;
12.6 mg. of 4-cyano-4'-(2-methyl) butylbiphenyl (chiral material);
4.8 mg. of 4,4'-bisacryloyl biphenyl (monomer); and
1.8 mg. of benzoin methyl ether (photo-initiator).

The cell was prepared as in Example 1. An AC electric voltage was applied during polymerization to cause homeotropic alignment of the liquid crystal.

At zero field, the cell was opaque or light scattering and the transmittance of the cell was 62%. When an AC voltage (Vᵣₘₛ=14V) was applied across the cell, it became optically clear. In the field-ON condition, the cell was transparent for incident light at all viewing angles. Because the zero field transmittance was 62%, the cell was not acceptable.

### Example 3

The following series of tests were performed to examine the effect of varying the concentration of monomer, 4,4'-bisacryloyl biphenyl, on the light scattering ability of a normal mode cell at zero field.

A normal mode cell was prepared using a solution of chiral nematic liquid crystal containing 10.0% by weight chiral material based on the combined weight of nematic liquid crystal and chiral material, and 4.4% by weight of a cross-linking monomer based on the combined weight of chiral liquid crystal and monomer. The chiral nematic liquid crystal had a pitch length of about 1.5 microns.

The polymerizable solution consisted of:
107 mg. of E-31LV nematic liquid crystal;
11.91 mg. of 4-cyano-4'-(2-methyl) butylbiphenyl (chiral material);
5.5 mg. of 4,4'-bisacryloyl biphenyl (monomer); and
1.7 mg. of benzoin methyl ether (photo-initiator).

The cell was prepared as in Example 1. An AC electric field was applied during polymerization to cause homeotropic alignment of the liquid crystal.

At zero field, the cell was opaque or light scattering and the transmittance was 7%. When an AC voltage (Vᵣₘₛ=28V) was applied across the cell, it became optically clear. In the field-ON condition, the cell was transparent for incident light at all viewing angles. This cell had good contrast between the field-ON and field-OFF states.

Another normal mode cell was prepared using a solution of chiral nematic liquid crystal containing 9.9% by weight chiral material based on the combined weight of nematic liquid crystal and chiral material and 1.2% by weight of a cross-linking monomer based on the combined weight of chiral nematic liquid crystal and monomer. The chiral nematic liquid crystal had a pitch length of about 1.5 microns.

The polymerizable solution consisted of:
164 mg. of E-31LV nematic liquid crystal;
18 mg. 4-cyano-4'-(2-methyl) butylbiphenyl (chiral material);
2.2 mg. of 4,4'-bisacryloyl biphenyl (monomer); and
0.7 mg. benzoin methyl ether (photo-initiator).

The cell was prepared as in Example 1. An AC electric field was applied during polymerization to cause homeotropic alignment of the liquid crystal.

At zero field, the transmittance was 67%. When an AC voltage (Vᵣₘₛ=18V) was applied across the cell, it became optically clear. In the field-ON condition, the cell was transparent for incident light at all viewing angles. Because the zero field transmittance was 67%, the cell was not acceptable.

A normal mode cell was prepared using a solution of chiral nematic liquid crystal containing 9.8% by weight chiral material based on the combined weight of nematic liquid crystal and chiral material and 9.0% by weight monomer based on the combined weight of chiral liquid crystal and monomer. The chiral liquid crystal had a pitch length of about 1.5 microns.

The polymerizable solution consisted of:
101 mg. of E-31LV nematic liquid crystal;
11.0 mg. of 4-cyano-4'-(2-methyl) butylbiphenyl (chiral material);
11.4 mg. of 4,4'-bisacryloyl biphenyl (monomer); and
3.5 mg. of benzoin methyl ether (photo-initiator).

The cell was prepared as in Example 1. The cell was almost transparent at zero field and was not a good cell.

### Reverse Mode Cells

Reverse mode cells which are optically clear in a field-OFF condition and light scattering in a field-ON condition are prepared using a chiral nematic liquid crystal having a pitch length in the infra-red spectrum. In the case of reverse mode cells, the pitch length varies from about 1.3 to about 3.7 microns. The chiral nematic liquid crystal typically consists of from about 4 to about 12% by weight chiral material based on the combined weight of nematic liquid crystalline chiral material; although, the weight amounts can vary depending upon the particular liquid crystal, chiral material and polymer which are used.

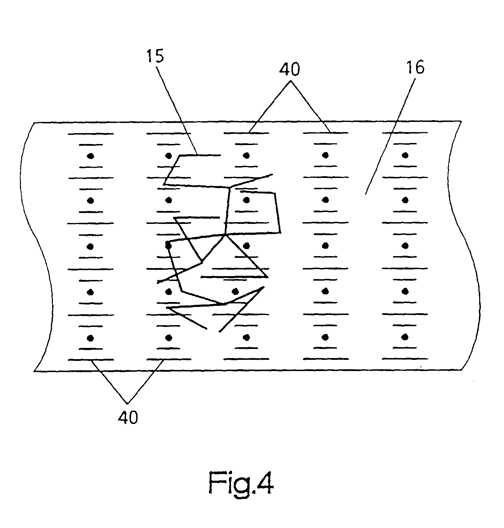

Reverse mode cells are made by irradiating the monomer-liquid crystal solution at zero field. As shown in Figure 4, the surface aligning affect of the rubbed polyimide layers 14 is effective to orient the liquid crystal molecules throughout the material into a twisted planar structure represented by reference numeral 40. A single polydomain is again conceptually represented at 15. In the field-OFF condition shown in Figure 4, a polymer-liquid crystalline material is optically clear, since there is no reflecting or scattering of light in the visible spectrum.

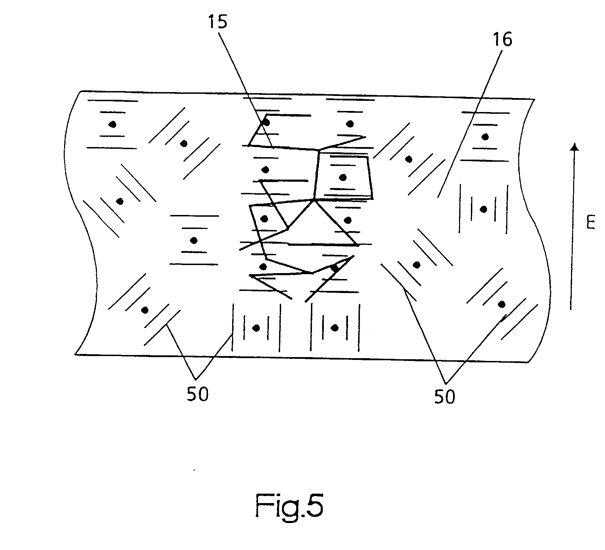

In the field-ON condition conceptually shown in Figure 5, the liquid crystal molecules in the vicinity of the polydomains 15 prefer the twisted planar orientation because of the anchoring affect of the polymer networks. The surrounding liquid crystal is reformed by the electric field through a focal conic texture. The focal conic texture in the presence of the field is a result of competition of the surface aligning affect of the polyimide layers, the electric field and the constraint of the liquid crystal-polymer composition. In the field-ON condition of Figure 5, the liquid crystalline-polymer material is strongly light scattering for all polarizations of incident light.

### Example 4

A reverse mode cell, light scattering in the field-ON condition and optically clear in a field-OFF condition, was prepared using a solution of chiral nematic liquid crystal containing 4.0% by weight chiral material based on the combined weight of nematic liquid crystal and chiral material, and 4.6% by weight of a cross-linking monomer based on the combined weight of chiral nematic liquid crystal and monomer. The chiral nematic liquid crystal had a pitch length of about 3.7 microns.

The polymerizable solution consisted of:
107 mg. of E-31LV nematic liquid crystal;
4.5 mg. of 4-cyano-4'-(2-methyl) butylbiphenyl (chiral material);
5.5 mg. of 4,4'-bisacryloyl biphenyl (monomer); and
1.2 mg. of benzoin methyl ether (photo-initiator).

A cell having two glass plates sealed at the edges and separated by 8 micron thick Mylar spacers was filled with the polymerizable solution. The glass plates were coated with indium-tin oxide to provide transparent electrodes. The electrodes were coated with polyimide and buffed to affect homogeneous surface alignment of the liquid crystal.

The filled cell was irradiated with U.V. light to polymerize the monomer and cause phase separation of the polymer into polydomains of polymer network throughout the chiral liquid crystal.

At zero field, the cell was optically clear and transparent for incident light at all viewing angles. In the field-OFF state the transmittance was 93%. When an AC voltage (Vᵣₘₛ=27V) was applied across the cell, it became opaque or light scattering. In the field-ON state, the transmittance was 8%, independent of the polarization of the incident light.

### Example 5

A series of tests were made to examine the effect of pitch length and concentration of chiral materials on the reverse mode cell.

A reverse mode cell was prepared using a solution of chiral nematic liquid crystal containing 7.8% by weight chiral material based on the weight of nematic liquid crystal and chiral material and 4.7% by weight of a cross-linking monomer based on the weight of chiral liquid crystal and monomer. The chiral nematic liquid crystal had a pitch length of about 1.9 microns.

The polymerizable solution consisted of:
159 mg. of E-31LV nematic liquid crystal;
13.7 mg. of 4-cyano-4'-(2-methyl) butylbiphenyl (chiral material);
8.5 mg. of 4,4'-bisacryloyl biphenyl (monomer); and
0.8 mg. of benzoin methyl ether (photo-initiator).

The cell was prepared in the manner described in Example 4.

At zero field, the cell was optically clear and transparent for incident light at all viewing angles. In the field-Off state the transmittance was 98%. When an AC voltage (Vᵣₘₛ=30V) was applied, the cell became opaque or light scattering. In the field-ON state, the transmittance was 9% and was independent of the polarization of the incident light.

A reverse mode cell was prepared using a solution of chiral nematic liquid crystal containing 12.1% by weight chiral material based on the combined weight of nematic liquid crystal and chiral material and 4.8% by weight of a cross-linking monomer based on the combined weight of chiral nematic liquid crystal and monomer. The chiral nematic liquid crystal had a pitch length of about 1.3 microns.

The polymerizable solution consisted of:
129 mg. of E-31LV nematic liquid crystal;
17.7 mg. of 4-cyano-4'-(2-methyl) butylbiphenyl (chiral material);
7.5 mg. of 4,4'-bisacryloyl biphenyl (monomer); and
0.6 mg. of benzoin methyl ether (photo-initiator).

The cell was prepared in the manner described in Example 4.

At zero field, the cell was optically clear and transparent for incident light at all viewing angles. In the field-OFF state the transmittance was 96%. When an AC voltage (Vᵣₘₛ=41V) was applied, the cell became opaque or light scattering. In the field-ON state, the transmittance was 5%, independent of the polarization of the incident light.

A reverse mode cell was prepared using a solution of chiral nematic liquid crystal containing 1.39% by weight chiral material based on the combined weight of nematic liquid crystal and chiral material and 4.5% by weight of a cross-linking monomer based on the combined weight of monomer and chiral liquid crystal. The chiral nematic liquid crystal had a pitch length of about 10.7 microns.

The polymerizable solution consisted of:
263 mg. of E-31LV nematic liquid crystal;
3.7 mg. of 4-cyano-4'-(2-methyl) butylbiphenyl (chiral material);
12.5 mg. of 4,4'-bisacryloyl biphenyl (monomer); and
1.4 mg. of benzoin methyl ether (photo-initiator).

The cell was prepared in the manner described in Example 4.

At zero field, the cell was optically clear and transparent for incident light at all viewing angles. In the field-OFF state the transmittance was 92%. When an AC voltage (Vᵣₘₛ=32V) was applied, the transmittance of polarized light parallel to the buffing direction was 35%. When an AC voltage (Vᵣₘₛ=18V) was applied, the transmittance of polarized light perpendicular to the buffing direction was 6%.

A reverse mode cell was prepared using a solution of chiral nematic liquid crystal containing 16.3% by weight chiral material based on the weight of nematic liquid crystal and chiral material and 4.4% by weight of a cross-linking monomer based on the weight of monomer and liquid crystal. The chiral nematic liquid crystal had a pitch length of about 0.9 microns.

The polymerizable solution consisted of:
125.7 mg. of E-31LV nematic liquid crystal;
24.4 mg. of 4-cyano-4'-(2-methyl) butylbiphenyl (chiral material);
6.9 mg. 4,4'-bisacryloyl biphenyl (monomer); and
0.7 mg. of benzoin methyl ether (photo-initiator).

The cell was prepared in the same manner as Example 4.

At zero field, the cell was optically clear and transparent for incident light at all viewing angles. In the field-Off state the transmittance was 94%. When an AC voltage (Vᵣₘₛ=50V) was applied, the cell became opaque or light scattering. In the field-ON state, the transmittance was 11% and was independent of the polarization of the incident light. This cell also displayed an hysterisis effect as the cell was switched from the field-ON to field-OFF state.

### Example 6

The following series of tests were performed to examine the effect of polymer concentration on the reverse mode cell.

A reverse mode cell was prepared using a solution of chiral nematic liquid crystal containing 6.1% by weight chiral material based on the combined weight of chiral material and nematic liquid crystal and 2.1% by weight of a cross-linking monomer based on the combined weight of monomer and chiral nematic liquid crystal. The chiral nematic liquid crystal had a pitch length of about 2.5 microns.

The polymerizable solution consisted of:
181 mg. of E-31LV nematic liquid crystal;
11.7 mg. of 4-cyano-4'-(2-methyl) butylbiphenyl (chiral material);
4.2 mg. of 4, 4'-bisacryloyl biphenyl (monomer); and
0.9 mg. of benzoin methyl ether (photo-initiator).

The cell was prepared in the manner described in Example 4.

At zero field, the cell was optically clear and transparent for incident light at all viewing angles. In the field-OFF state the transmittance was 97%. When an AC voltage (Vᵣₘₛ=18V) was applied, the cell became opaque or light scattering. In the field-ON state, the transmittance was 14%, and independent of the polarization of the incident light. The turn-off time for this cell was 5 milliseconds.

A reverse mode cell was prepared using a solution of chiral nematic liquid crystal material containing 6% by weight chiral material based on the combined weight of nematic liquid crystal and chiral material, and 2.9% by weight of a cross-linking monomer based on the combined weight of chiral nematic liquid crystal and monomer. The chiral nematic liquid crystal has a pitch length of about 2.5 microns.

The polymerizable solution consisted of:
181 mg. of E-31LV nematic liquid crystal;
11.5 mg. of 4-cyano-4'-(2-methyl) butylbiphenyl (chiral material);
5.7 mg. of 4,4'-bisacryloyl biphenyl (monomer); and
0.7 mg. of benzoin methyl ether (photo-initiator).

The cell was prepared in the same manner described in Example 4.

At zero field, the cell was optically clear and transparent for incident light at all viewing angles. In the field-OFF state the transmittance was 95%. When an AC voltage (Vᵣₘₛ=21V) was applied, the cell became translucent or light scattering. In the field-ON state, the transmittance was 8% and independent of the polarization of the incident light. The turn-off time for the cell was 4 milliseconds.

A reverse mode cell was prepared using a solution of chiral nematic liquid crystal containing 6.0% by weight chiral material based on the combined weight of the nematic liquid crystal and chiral material, and 4.3% by weight of a cross-linking monomer based on the combined weight of monomer and chiral liquid crystal. The chiral nematic liquid crystal has a pitch length of about 2.5 microns.

The polymerizable solution consisted of:
180 mg. of E-31LV nematic liquid crystal;
11.5 mg. of 4-cyano-4'-(2-methyl) butylbiphenyl (chiral material);
8.6 mg. of 4, 4'-bisacryloyl biphenyl (monomer); and
0.9 mg. of benzoin methyl ether (photo-initiator).

The cell was prepared in the manner described in Example 4.

At zero field, the cell was optically clear and transparent for incident light at all viewing angles. In the field-OFF state the transmittance was 95%. When an AC voltage (Vᵣₘₛ=28V) was applied, the cell became translucent or light scattering. In the field-ON state, the transmittance was 8% and independent of the polarization of the incident light. The turn-off time of the cell was 3 milliseconds.

A reverse mode cell was prepared using a solution of chiral nematic liquid containing 6.1% by weight chiral material based on the combined weight of nematic liquid crystal and chiral material, and 5.8% by weight of a cross-linking monomer based on the combined weight of chiral liquid crystal and monomer. The chiral nematic liquid crystal had a pitch length of about 2.5 microns.

The polymerizable solution consisted of:
179 mg. of E-31LV nematic liquid crystal;
11.7 mg. of 4-cyano-4'-(2-methyl) butylbiphenyl (chiral material);
10.6 mg. of 4, 4'-bisacryloyl biphenyl (monomer); and
1.2 mg. of benzoin methyl ether (photo-initiator).

The cell was prepared in the manner described in Example 4.

At zero field, the transmittance was 76%. When the AC voltage (Vᵣₘₛ=28V) was applied across the cell, the transmittance decreased. In the field-ON state, the transmittance was 46%.

A reverse mode cell was prepared using a solution of chiral nematic liquid crystal containing 6.0% by weight chiral material based on the combined weight of nematic liquid crystal and chiral material and 1.0% by weight of a cross-linking monomer based on the combined weight of the chiral nematic liquid crystal and monomer. The chiral nematic liquid crystal had a pitch length of about 2.5 microns.

The polymerizable solution consisted of:
184 mg. of E-31LV nematic liquid crystal;
11.7 mg. of 4-cyano-4'-(2-methyl) butylbiphenyl (chiral material);
20 mg. of 4,4'-bisacryloyl biphenyl (monomer); and
0.7 mg. of benzoin methyl ether (photo-initiator).

The cell was prepared in the manner described in Example 4.

At zero field, the cell was optically clear and transparent for incident light at all viewing angles. In the field-OFF state the transmittance was 96%. When an AC voltage (Vᵣₘₛ=14V) was applied across the cell, the cell became translucent or light scattering. In the field-ON state, the transmittance was 13%, independent of the polarization of the incident light. The turn-off time was 20 milliseconds, which is long. The cell was also easily damaged by the electric field.

### Bistable Color Display Cells

Bistable color display cells which scatter light in one state and reflect circularly polarized colored light in another state and which also can be operated to exhibit optical transparency are made using chiral nematic liquid crystal which has a pitch length effective to reflect light in the visible spectrum. Preferred materials have a pitch length ranging from about 0.25 to about 0.44 microns. Typical pitch lengths are 0.27 microns for blue color, 0.31 microns for green colors and 0.40 microns for red color. Bistable color display materials are typically prepared to contain from about 27 to about 48% chiral material based on the combined weight of nematic liquid crystal and chiral material; although, as in the case of previously described embodiments, the weight amount can vary depending upon the particular chiral material, liquid crystalline polymer which are used.

Figure 4 conceptually illustrates the bistable color display material of the invention in its light reflecting state prepared by polymerization in zero field with the planar texture. In this state, the liquid crystal molecules in the vicinity of the polydomains 15 prefer the illustrated twisted planar structure. The surrounding liquid crystal also has a twisted planar structure so that the material will reflect light, the color of which depends upon the particular pitch length.

Figure 5 conceptually illustrates the bistable color display material in its light scattering state. In this state, the liquid crystal in the vicinity of the polydomains 15 again prefers the illustrated twisted planar structure. The surrounding liquid crystal has a focal conic texture.

If the pitch length of the material is in the range to reflect visible light, both the light reflecting state of Figure 4 and the light scattering state of Figure 5 are stable in the absence of an electric field. If the bistable material is in the light reflecting state of Figure 4 and a low electric field pulse is applied, for example, about 6 volts per micron, the material will be driven to the light scattering state of Figure 5 and will remain in that state at zero field. If the bistable material is in the light scattering state of Figure 5 and a high electric field pulse of about 12 volts per micron is applied, the liquid crystal molecules will reform to the light reflecting state of Figure 4 at the end of the pulse and will remain in that condition.

If the high electric field necessary to untwist the liquid crystal molecules is maintained, the liquid crystal directors will be homeotropically aligned so that the material is transparent. If the field is slowly removed, the liquid crystal orientation will reform to the light scattering state of Figure 5. When the field is quickly removed, the orientation will reform to the light reflecting state of Figure 4.

The bistable material can be formed by irradiating the monomer-liquid crystal solution either at zero field or in the presence of an electric field. When polymerization takes place at zero field, the surface aligning effect of the cell walls results in the twisted planar, light reflecting orientation of Figure 4. When polymerization takes place in the presence of a field so that the liquid crystal directors are homeotropically aligned as indicated in Figure 2, the liquid crystal orientation will either reform to the light reflecting state of Figure 4 when the field is quickly turned off or the light scattering orientation of Figure 5 when the field is slowly turned off.

### Example 7

A bistable color display cell light scattering in one state and reflecting red circularly polarized light in another state was prepared using a solution of chiral nematic liquid crystal containing 29.8% by weight chiral material based on the combined weight of chiral material and nematic liquid crystal, and 2.7% by weight of a cross-linking monomer based on the combined weight of monomer and chiral liquid crystal. The chiral liquid crystal had a pitch length of 0.41 microns.

The polymerizable solution consisted of:
67.8 mg. of E-31LV nematic liquid crystal;
14.0 mg. of 4"-(2-methylbutylphenyl)-4'-(2-methylbutyl)-4-biphenyl carboxylate (chiral material);
14.8 mg. of 4-cyano-4'-(2-methyl) butylbiphenyl (chiral material):
2.7 mg. of 4,4'-bisacryloyl biphenyl (monomer); and
1.0 mg. of benzoin methyl ether (photo-initiator).

A cell having two glass plates sealed at the edges and separated by 8 micron thick Mylar spacers was filled with the polymerizable solution. The glass plates were coated with indium-tin oxide to provide transparent electrodes. The electrodes were coated with polyimide and buffed to affect homogeneous surface alignment of the liquid crystal.

The filled cell was irradiated with U.V. light for thirty minutes to polymerize the monomer and cause phase separation of the polymer into polydomains of polymer network throughout the chiral liquid crystal. The state of the cell was controlled by the voltage of an electric pulse. When a high AC voltage (Vᵣₘₛ=104V) pulse was applied, the cell was optically clear and transparent to incident light. When the high AC voltage was removed, the sample was in the reflective state and because of the pitch of the chiral liquid crystal, the color of the cell was red. When an AC voltage (50V≤ Vᵣₘₛ ≤ 85V) was applied the cell switched to the light scattering state and after removal of the low voltage field the cell remained in the light scattering state. Both the reflecting and scattering states were observed to be stable at zero field for over several months.

### Example 8

A series of test cells were made by varying the concentration of chiral material and pitch length of the chiral nematic liquid crystal.

A bistable cell having a blue reflecting state was prepared using a solution of chiral nematic liquid crystal containing 45.3% by weight chiral material based on the weight of chiral material and nematic liquid crystal, and 1.5% by weight of a cross-linking monomer based on the combined weight of monomer and chiral nematic liquid crystal. The chiral nematic liquid crystal had a pitch length of about 0.27 microns, reflecting blue circularly polarized light.

The polymerizable solution consisted of:
132.6 mg. of E-31LV nematic liquid crystal;
50.0 mg. of 4"-(2-methylbutylphenyl)-4'-(2-methylbutyl)-4-biphenyl carboxylate (chiral material);
59.7 mg. of 4-cyano-4'-(2-methyl) butylbiphenyl (chiral material);
3.7 mg. of 4, 4'-bisacryloyl biphenyl (monomer); and
1.0 mg. of benzoin methyl ether (photo-initiator).

The cell was prepared as in Example 7. The cell was in a blue reflecting state after the removal of the high voltage pulse.

A bistable cell having a green reflecting state was prepared using a solution of chiral nematic liquid crystal containing 39.1% by weight chiral material based on the weight of chiral material and nematic liquid crystal and 2.0% by weight of a cross-linking monomer based on the combined weight of chiral nematic liquid crystal and monomer. The chiral liquid crystal had a pitch length of about 0.31 microns, reflecting green circularly polarized light.

The polymerizable solution consisted of:
85.6 mg. of E-31LV nematic liquid crystal;
27.0 mg. of 4"-(2-methylbutylphenyl)-4'-(2-methylbutyl)-4-biphenyl carboxylate (chiral material);
28.0 mg. of 4-cyano-4'-(2-methyl) butylbiphenyl (chiral material);
2.9 mg. of 4,4'-bisacryloyl biphenyl (monomer); and
1.0 mg. of benzoin methyl ether (photo-initiator).

The cell was prepared as in Example 7. The cell was in a green reflecting state after the removal of the high voltage pulse.

Another bistable cell having a red reflecting state was prepared using a solution of chiral nematic liquid crystal containing 30.0% by weight chiral material based on the combined weight of chiral material and nematic liquid crystal and 1.9% by weight of a cross-linking monomer based on the combined weight of chiral nematic liquid crystal and monomer. The chiral liquid crystal has a pitch length of about 0.41 microns.

The polymerizable solution consisted of:
80.0 mg. of E-31LV nematic liquid crystal;
16.7 mg. of 4"-(2-methylbutylphenyl)-4'-(2-methylbutyl)-4-biphenyl carboxylate (chiral material);
17.5 mg. of 4-cyano-4'-(2-methyl) butylbiphenyl (chiral material);
22 mg. of 4,4'-bisacryloyl biphenyl (monomer); and
1.0 mg. of benzoin methyl ether (photo-initiator).

The sample cell was prepared as in Example 7. The cell was a red reflecting state after removal of the high voltage pulse.

### Example 9

A green reflecting bistable cell with a greater degree of contrast between the reflecting state and scattering state was prepared using a solution of chiral nematic liquid crystal containing 39.1% by weight chiral material based on the combined weight of chiral material and nematic liquid crystal and 2.0% by weight of a cross-linking monomer based on the combined weight of monomer and chiral nematic liquid crystal. The chiral nematic liquid crystal had a pitch length of about 0.31 microns, reflecting green circularly polarized light.

The polymerizable solution consisted of:
85.6 mg. of E-31LV nematic liquid crystal;
27.0 mg. of 4"-(2-methylbutylphenyl)-4'-(2-methylbutyl)-4-biphenyl carboxylate (chiral material);
28.0 mg. of 4-cyano-4'-(2-methyl) butylbiphenyl (chiral material);
2.7 mg. of 4,4'-bisacryloyl biphenyl (monomer); and
1.0 mg. of benzoin methyl ether (photo-initiator).

A cell having two glass plates sealed at the edges and separated by 8 micron thick Mylar spacers was filled with the polymerizable solution. The glass plates were coated with indium-tin oxide to provide transparent electrodes. The electrodes were coated with polyimide and buffed to affect homogeneous surface alignment of the liquid crystal.

The filled cell was irradiated with U.V. light to polymerize the monomer and cause phase separation of the polymer into polydomains of polymer networks throughout the chiral liquid crystal. While the cell was being irradiated, an AC electric voltage was applied to cause homeotropic alignment of the liquid crystal.

The state of the cell was controlled by the voltage of an electric pulse. When a high AC voltage (Vᵣₘₛ = 104V) was applied, the cell was optically clear and transparent to all angles of incident light. When the high AC voltage was removed, the sample was in the reflecting state and because of the pitch of the chiral liquid crystal, the color of the cell was green. When an AC voltage (50V ≤Vᵣₘₛ≤85V) was applied the cell switched to the light scattering state and after removal of the low voltage field the cell remained in the light scattering state. Both the reflecting and scattering states were observed to be stable states. This cell appeared to have better contrast between the reflecting and scattering states than the cell prepared in Example 7 or cells prepared in Example 8.

### Example 10

A series of tests were performed to examine the effect of polymer concentration on the bistable cells.

In one test, no monomer was added to the chiral nematic liquid crystal. The solution of chiral nematic liquid crystal contained 32.4% by weight chiral material based on the combined weight of chiral material and nematic liquid crystal.

The solution consisted of:
121.6 mg. of E-31LV nematic liquid crystal;
29.7 mg. of 4"-(2-methylbutylphenyl)-4'-(2-methylbutyl)-4-biphenyl carboxylate (chiral material); and
20.5 mg. of 4-cyano-4'-(2-methyl) butylbiphenyl (chiral material).

A cell having two glass plates sealed at the edges and separated by 10 micron thick Mylar spacers was filled with the chiral nematic liquid crystal solution. The glass plates were coated with indium-tin oxide to provide transparent electrodes. The electrodes were coated with polyimide and buffed to affect homogeneous surface alignment of the liquid crystal.

At zero field, the scattering state changed into the reflecting state over a time span of one hour. The reflecting state of this cell was not uniform as well.

A bistable cell was prepared using a solution of chiral nematic liquid crystal containing 29.8% by weight chiral material based on the combined weight of chiral material and nematic liquid crystal and 2.7% by weight of a cross-linking monomer based on the combined weight of chiral nematic liquid crystal and monomer. The chiral nematic liquid crystal had a pitch length of about 0.41 microns.

The polymerizable solution consisted of:
67.8 mg. of E-31LV nematic liquid crystal;
14.0 mg. of 4"-(2-methylbutylphenyl)-4'-(2-methylbutyl)-4-biphenyl carboxylate (chiral material);
14.8 mg. of 4-cyano-4'-(2-methyl)-butylbiphenyl (chiral material);
2.7 mg. of 4,4'-bisacryloyl biphenyl (monomer); and
1.0 mg. of benzoin methyl ether (photo-initiator).

The cell was prepared in the manner described in Example 7. The cell in the reflecting state was red after the removal of the high voltage pulse. The voltages required to switch the cell to the reflecting or scattering states were the same as in Example 7. The reflecting state and scattering state had good contrast and both states were stable.

A bistable cell was prepared using a solution of chiral nematic liquid crystal containing 30.3% by weight chiral material based on the combined weight of chiral material and nematic liquid crystal and 6.9% by weight of a cross-linking monomer. The chiral nematic liquid crystal had a pitch length of about 0.40 microns.

The polymerizable solution consisted of:
92.8 mg. of E-31LV nematic liquid crystal;
20.0 mg. of 4"-(2-methylbutylphenyl)-4'-(2-methylbutyl)-4-biphenyl carboxylate (chiral material);
20.3 mg. of 4-cyano-4'-(2-methyl) butylbiphenyl (chiral material);
9.9 mg. of 4,4'-bisacryloyl biphenyl (monomer); and
0.8 mg. of benzoin methyl ether (photo-initiator).

The sample cell was prepared in the manner described in Example 7. The cell did not have a scattering state. Following removal of any AC electric pulse, the sample cell returned to the reflective state. The color of the cell in the reflective state was red.

The following Table 1 summarizes the exemplary concentration ranges of chiral material and polymer, pitch lengths and driving voltages for each embodiment of the invention.

**TABLE 1**

| Concentration Range | Normal-Mode Cell | Reverse-Mode Cell | Bistable Color Cell |
|---|---|---|---|
| Chiral | 9-11% (pitch: 1.6-1.3µm) | 4-12% (pitch: 3.7-1.3µm) | Blue color (pitch: 0.27µm) 45.2% |
| | | | |
| | | | Green color (pitch: 0.31µm) 38.9% |
| | | | |
| | | | Red color (pitch: 0µm) 29.9% |
| | | | |
| Polymer | 2.5-5% | 2-4.5% | 1.0-4.5% |
| | | | |
| Driving Voltage Vrms | ∼25 V | ∼25 V | ∼80 V to color state |
| | | | |
| | | | ∼15 V to white state |

Many modifications and variations of the invention will be apparent to those skilled in the art in light of the foregoing detailed disclosure. Therefore, within the scope of the appended claims, the invention can be practiced otherwise than as specifically shown and described.

## Claims

1. A light modulating cell in which liquid crystalline light modulating material comprising chiral nematic liquid crystal having positive dielectric anisotropy and phase-separated domains of polymer, is contained between cell walls, characterised in that the polymer is present in an amount of less than 10% by weight based on the total weight of polymer and liquid crystal; said liquid crystal includes chiral material in an amount effective to form a focal conic texture having a pitch length effective to reflect light in the infra-red spectrum; the structure of said cell walls is treated to align the liquid crystal molecules and cooperate with said liquid crystal so as to form a stable focal conic texture in the absence of a field, and to permit the liquid crystal to change textures upon the application of a field; and said phase separated domains are formed in the presence of a field effective to homeotropically align the liquid crystal such that a portion of the liquid crystal in the vicinity of the domains is characterized by a preferential homeotropic alignment in the absence of a field, the resulting material being characterized by a light scattering focal conic texture in the absence of a field and an optically clear homeotropic alignment in a field-ON condition.

2. A light modulating cell in which liquid crystalline light modulating material comprising chiral nematic liquid crystal having positive dielectric anisotropy and phase-separated domains of polymer, is contained between cell walls, characterised in that said polymer is present in an amount of less than 10% by weight based on the total weight of polymer and liquid crystal; said liquid crystal includes chiral material in an amount effective to form twisted planar textures having a pitch length effective to reflect light in the infra-red spectrum; the structure of said cell walls is treated to align the liquid crystal so as to stabilize the twisted planar textures in the absence of a field and to permit the liquid crystal to change textures upon the application of a field, the liquid crystal material being characterized by an optically clear twisted planar texture in the absence of a field and by a light scattering focal conic texture in a field-ON condition.

3. A light modulating cell in which liquid crystalline material comprising liquid crystal having positive dielectric anisotropy and phase-separated domains of polymer is contained between cell walls, and including means for addressing said liquid crystal material, characterised in that said polymer is present in an amount of less than 10% by weight based on the total weight of polymer and liquid crystal; said liquid crystal is a chiral nematic liquid crystal having a pitch length effective to reflect light in the visible spectrum; the structure of said cell walls is treated to align the liquid crystal and cooperate with said liquid crystal to form focal conic and twisted planar textures that are stable in the absence of a field; said means for addressing said light modulating material is adapted to selectively establish a first voltage pulse of a magnitude effective to transform at least a portion of said liquid crystal from a focal conic texture to a light reflecting twisted planar texture, and a second voltage pulse of a magnitude effective to transform at least a portion of said liquid crystal from a light reflecting twisted planar texture to a focal conic texture.

4. A cell according to claim 3 wherein the liquid crystal exhibits a stable light reflecting twisted planar texture following sudden removal of a voltage pulse effective to homeotropically align the liquid crystal, and a stable light scattering focal conic texture following removal of a voltage pulse below that which will homeotropically align the liquid crystal.

5. A cell according to claim 3 or claim 4, wherein said means for addressing is adapted to provide an AC voltage pulse.

6. A method of modulating light comprising providing a cell in which liquid crystalline material comprising liquid crystal having positive dielectric anisotropy and phase-separated domains of polymer, is contained between cell walls, characterised in that said polymer is present in an amount of less than 10% by weight based on the total weight of polymer and liquid crystal; said liquid crystal is a chiral nematic liquid crystal having a pitch length effective to reflect light in the visible spectrum; the structure of said cell walls is treated to align the liquid crystal and cooperate with said liquid crystal to form focal conic and twisted planar textures that are stable in the absence of a field; said method further comprising selectively applying voltage pulse(s) to said material of a magnitude effective to transform at least a portion of said liquid crystal from a focal conic texture to a light reflecting twisted planar texture, or to transform at least a portion of said liquid crystal from a light reflecting twisted planar texture to a focal conic texture.

7. A method according to claim 6 comprising selectively switching said material to a light reflecting twisted planar texture following the sudden removal of a voltage pulse effective to homeotropically align the liquid crystal, and a light scattering focal conic texture following removal of a voltage pulse below that which will homeotropically align the liquid crystal.

8. A method according to claim 6 or 7 wherein a said voltage pulse is a square AC pulse.

## Patentansprüche

1. Lichtsteuerungszelle, bei der ein flüssigkristallines lichtsteuerndes Material aus einem chiralen nematischen Flüssigkristall mit positiver dielektrischer Anisotropie und phasengetrennten Polymerbezirken zwischen Zellwänden enthalten ist, dadurch gekennzeichnet, daß das Polymer in einer Menge von weniger als 10 Gew.-%, bezogen auf das Gesamtgewicht an Polymer und Flüssigkristall, vorliegt, der Flüssigkristall ein chirales Material in einer Menge enthält, die die Bildung einer fokal konischen Textur mit einer zur Reflexion des Lichts im Infrarotspektrum wirkungsvollen Ganghöhe bewirkt, die Struktur der Zellwände einer Behandlung unterzogen wird, durch die die Flüssigkristallmoleküle ausgerichtet werden und die Zellwandstruktur mit dem Flüssigkristall so in Wechselwirkung tritt, daß in Abwesenheit eines Feldes eine stabile fokal konische Textur gebildet wird und der Flüssigkristall bei Anlegen eines Feldes seine Textur ändern kann, und die Bildung der phasengetrennten Bezirke bei Vorliegen eines zur homöotropen Ausrichtung des Flüssigkristalls wirkungsvollen Feldes erfolgt, so daß ein Teil des Flüssigkristalls in der Nähe der Bezirke in Abwesenheit eines Feldes durch eine bevorzugte homöotrope Ausrichtung gekennzeichnet ist, wobei das entstehende Material in Abwesenheit eines Feldes durch eine lichtstreuende fokal konische Textur und bei eingeschaltetem Feld durch eine optisch klare homöotrope Ausrichtung gekennzeichnet ist.

2. Lichtsteuerungszelle, bei der ein flüssigkristallines lichtsteuerndes Material aus einem chiralen nematischen Flüssigkristall mit positiver dielektrischer Anisotropie und phasengetrennten Polymerbezirken zwischen Zellwänden enthalten ist, dadurch gekennzeichnet, daß das Polymer in einer Menge von weniger als 10 Gew.-%, bezogen auf das Gesamtgewicht an Polymer und Flüssigkristall, vorliegt, der Flüssigkristall ein chirales Material in einer Menge enthält, die die Bildung von verdrillt planaren Texturen mit einer zur Reflexion des Lichts im Infrarotspektrum wirkungsvollen ganghöhe bewirkt, die Struktur der Zellwände einer Behandlung unterzogen wird, durch die der Flüssigkristall ausgerichtet wird, wodurch in Abwesenheit eines Feldes eine Stabilisierung der verdrillt planaren Texturen erfolgt und der Flüssigkristall bei Anlegen eines Feldes seine Textur ändern kann, wobei das Flüssigkristallmaterial in Abwesenheit eines Feldes durch eine optisch klare verdrillt planare Textur und bei eingeschaltetem Feld durch eine lichtstreuende fokal konische Textur gekennzeichnet ist.

3. Lichtsteuerungszelle, bei der ein flüssigkristallines Material aus einem Flüssigkristall mit positiver dielektrischer Anisotropie und phasengetrennten Polymerbezirken zwischen Zellwänden enthalten ist und die ein Mittel zur Ansteuerung des Flüssigkristallmaterials enthält, dadurch gekennzeichnet, daß das Polymer in einer Menge von weniger als 10 Gew.-%, bezogen auf das Gesamtgewicht an Polymer und Flüssigkristall, vorliegt, es sich bei dem Flüssigkristall um einen chiralen nematischen Flüssigkristall mit einer zur Reflexion des Lichts im sichtbaren Spektrum wirkungsvollen Ganghöhe handelt, die Struktur der Zellwände einer Behandlung unterzogen wird, durch die der Flüssigkristall ausgerichtet wird und die Zellwandstruktur mit dem Flüssigkristall so in Wechselwirkung tritt, daß eine fokal konische Textur und eine verdrillt planare Textur gebildet werden, die in Abwesenheit eines Feldes stabil sind, und das Mittel zur Ansteuerung des lichtsteuernden Materials zur selektiven Erzeugung eines ersten Spannungsimpulses in einer zur Umwandlung mindestens eines Teils des Flüssigkristalls von einer fokal konischen zu einer lichtreflektierenden verdrillt planaren Textur wirkungsvollen Höhe und eines zweiten Spannungsimpulses in einer zur Umwandlung mindestens eines Teils des Flüssigkristalls von einer lichtreflektierenden verdrillt planaren Textur zu einer fokal konischen Textur geeignet ist.

4. Zelle nach Anspruch 3, wobei der Flüssigkristall nach plötzlicher Wegnahme eines zur homöotropen Ausrichtung des Flüssigkristalls wirkungsvollen Spannungsimpulses eine stabile lichtreflektierende verdrillt planare Textur und nach Wegnahme eines niedrigeren als des zur homöotropen Ausrichtung des Flüssigkristalls notwendigen Spannungsimpulses eine stabile lichtstreuende fokal konische Textur aufweist.

5. Zelle nach Anspruch 3 oder Anspruch 4, wobei das Ansteuermittel zur Erzeugung eines Wechselstrom-Spannungsimpulses geeignet ist.

6. Lichtsteuerungsverfahren, bei dem man eine Zelle bereitstellt, bei der ein flüssigkristallines Material aus einem Flüssigkristall mit positiver dielektrischer Anisotropie und phasengetrennten Polymerbezirken zwischen Zellwänden enthalten ist, dadurch gekennzeichnet, daß das Polymer in einer Menge von weniger als 10 Gew.-%, bezogen auf das Gesamtgewicht an Polymer und Flussigkristall, vorliegt, es sich bei dem Flüssigkristall um einen chiralen nematischen Flüssigkristall mit einer zur Reflexion des Lichts im sichtbaren Spektrum wirkungsvollen Ganghöhe handelt, die Struktur der Zellwände einer Behandlung unterzogen wird, durch die der Flüssigkristall ausgerichtet wird und die Zellwandstruktur mit dem Flüssigkristall so in Wechselwirkung tritt, daß eine fokal konische Textur und eine verdrillt planare Textur gebildet werden, die in Abwesenheit eines Feldes stabil sind, wobei man bei dem Verfahren weiterhin auf dieses Material selektiv einen oder mehrere Spannungsimpulse in einer zur Umwandlung mindestens eines Teils des Flüssigkristalls von einer fokal konischen zu einer lichtreflektierenden verdrillt planaren Textur oder zur Umwandlung mindestens eines Teils des Flüssigkristalls von einer lichtreflektierenden verdrillt planaren Textur zu einer fokal konischen Textur wirkungsvollen Höhe einwirken läßt.

7. Verfahren nach Anspruch 6, bei dem man das Material nach plötzlicher Wegnahme eines zur homöotropen Ausrichtung des Flüssigkristalls wirkungsvollen Spannungsimpulses selektiv auf eine lichtreflektierende verdrillt planare Textur und nach Wegnahme eines niedrigeren als des zur homöotropen Ausrichtung des Flüssigkristalls notwendigen Spannungsimpulses auf eine lichtstreuende fokal konische Textur umschaltet.

8. Verfahren nach Anspruch 6 oder 7, wobei es sich bei dem Spannungsimpuls um einen Wechselstrom-Rechteckimpuls handelt.

## Revendications

1. Cellule modulant la lumière dans laquelle la matière cristalline liquide modulant la lumière comprenant un cristal liquide nématique chiral ayant une anisotropie diélectrique positive et des domaines de polymère séparés en phase, est contenue entre des parois cellulaires, caractérisée en ce que le polymère est présent en une quantité inférieure à 10% en poids par rapport au poids total du polymère et du cristal liquide; ledit cristal liquide inclut la matière chirale en une quantité efficace pour former une texture conique focale ayant une longueur de pas efficace pour réfléchir la lumière dans le spectre infrarouge; la structure desdites parois cellulaires est traitée pour aligner les molécules de cristal liquide et pour coopérer avec ledit cristal liquide de façon à former une texture conique focale stable en l'absence d'un champ, et pour permettre au cristal liquide de changer de textures pendant l'application d'un champ; et lesdits domaines séparés en phase sont formés en présence d'un champ efficace pour aligner homéotropiquement le cristal liquide de sorte qu'une portion du cristal liquide à proximité des domaines est caractérisée par un alignement homéotrope préférentiel en l'absence d'un champ, la matière résultante étant caractérisée par une texture conique focale diffusant la lumière en l'absence d'un champ et un alignement homéotrope optiquement transparent dans une condition de champ appliqué.

2. Cellule modulant la lumière dans laquelle la matière cristalline liquide modulant la lumière comprenant un cristal liquide nématique chiral ayant une anisotropie diélectrique positive et des domaines de polymère séparés en phase, est contenue entre des parois cellulaires, caractérisée en ce que ledit polymère est présent en une quantité inférieure à 10% en poids par rapport au poids total de polymère et de cristal liquide; ledit cristal liquide inclut la matière chirale en une quantité efficace pour former des textures planes hélicoïdales ayant une longueur de pas efficace pour réfléchir la lumière dans le spectre infrarouge; la structure desdites parois cellulaires est traitée pour aligner le cristal liquide de façon à stabiliser les textures planaires hélicoïdales en l'absence d'un champ et pour permettre au cristal liquide de changer de textures après l'application d'un champ, la matière cristalline liquide étant caractérisée par une texture planaire hélicoïdale optiquement transparente en l'absence d'un champ et par une texture conique focale diffusant la lumière dans une condition de champ appliqué.

3. Cellule modulant la lumière dans laquelle la matière cristalline liquide comprenant un cristal liquide ayant une anisotropie diélectrique positive et des domaines de polymère séparés en phase est contenue entre des parois cellulaires, et incluant un moyen pour aborder ladite matière cristalline liquide, caractérisée en ce que ledit polymère est présent en une quantité inférieure à 10% en poids par rapport au poids total du polymère et du cristal liquide; ledit cristal liquide est un cristal liquide nématique chiral ayant une longueur de pas efficace pour réfléchir la lumière dans le spectre visible; la structure desdites parois cellulaires est traitée pour aligner le cristal liquide et coopérer avec ledit cristal liquide pour former des textures planaires hélicoïdales et coniques focales qui sont stables en l'absence d'un champ; ledit moyen d'attaque de ladite matière modulant la lumière est adapté en vue d'appliquer sélectivement une première impulsion de tension d'une grandeur efficace pour faire passer au moins une portion dudit cristal liquide, d'une texture conique focale à une texture planaire hélicoïdale réfléchissant la lumière, et une deuxième impulsion de tension d'une grandeur efficace pour faire passer au moins une portion dudit cristal liquide, d'une texture hélicoïdale enroulée réfléchissant la lumière à une texture conique focale.

4. Cellule selon la revendication 3, dans laquelle le cristal liquide présente une texture planaire hélicoïdale stable réfléchissant la lumière à la suite du retrait soudain d'une impulsion de tension efficace pour aligner homéotropiquement le cristal liquide, et une texture conique focale stable diffusant la lumière à la suite du retrait d'une impulsion de tension au-dessous de celle qui alignera homéotropiquement le cristal liquide.

5. Cellule selon la revendication 3 ou 4, dans laquelle ledit moyen d'attaque est adapté en vue de fournir une impulsion de tension alternative.

6. Procédé de modulation de lumière consistant à fournir une cellule dans laquelle la matière cristalline liquide comprenant un cristal liquide ayant une anisotropie diélectrique positive et des domaines de polymère séparés en phase, est contenue entre des parois cellulaires, caractérisée en ce que ledit polymère est présent en une quantité inférieure à 10% en poids par rapport au poids total de polymère et de cristal liquide; ledit cristal liquide est un cristal liquide nématique chiral ayant une longueur de pas efficace pour réfléchir la lumière dans le spectre visible; la structure desdites parois cellulaires est traitée pour aligner le cristal liquide et pour coopérer avec ledit cristal liquide pour former des textures planaires hélicoïdales et coniques focales qui sont stables en l'absence d'un champ; ledit procédé consistant de plus à appliquer sélectivement une ou des impulsions de tension à ladite matière d'une grandeur efficace pour faire passer au moins une portion dudit cristal liquide, d'une texture conique focale à une texture planaire hélicoïdale réfléchissant la lumière, ou pour faire passer au moins une portion dudit cristal liquide, d'une texture planaire hélicoïdale réfléchissant la lumière à une texture conique focale.

7. Procédé selon la revendication 6, consistant sélectivement à faire commuter la texture de ladite matière à une texture planaire hélicoïdale réfléchissant la lumière à la suite du retrait soudain d'une impulsion de tension efficace pour aligner homéotropiquement le cristal liquide, et à une texture conique focale diffusant la lumière à la suite du retrait d'une impulsion de tension au-dessous de celle qui alignera homéotropiquement le cristal liquide.

8. Procédé selon la revendication 6 ou 7, dans lequel unedite impulsion de tension est une impulsion alternative carrée.
